# EUROPÄISCHE PATENTSCHRIFT

(11) **EP 0 763 317 B1**
(45) Veröffentlichungstag und Bekanntmachung des Hinweises auf die Patenterteilung: **09.02.2000**
(21) Anmeldenummer: 96112258.7
(22) Anmeldetag: 30.07.1996
(51) Int. Cl.: A01C 7/08

(54) **Pneumatische Verteilmaschine**
Pneumatic distributor
Distributeur pneumatique

(30) Priorität: 15.09.1995 DE 19534094; 17.10.1995 DE 19538628
(43) Veröffentlichungstag der Anmeldung: 19.03.1997
(73) Patentinhaber: Amazonen-Werke H. Dreyer GmbH & Co. KG, 49205 Hasbergen (DE)
(72) Erfinder: Gattermann, Bernd, Dipl.-Ing., 27798 Hude (DE); Siefken, Claus, 27777 Ganderkesee (DE); Feldhaus, Werner, 27801 Gevershausen (DE)

(56) Entgegenhaltungen:
- EP-A- 0 702 890
- GB-A- 1 411 741
- US-A- 3 637 108

## Beschreibung

Die Erfindung betrifft eine pneumatische Verteilmaschine gemäß des Oberbegriffes des Patentanspruches 1.

Die GB-PS 14 11 741 zeigt eine pneumatische Verteilmaschine, bei der das Steigrohr mit dem Verteilerkopf auf der Vorderseite des Vorratsbehälters angeordnet ist, wobei der Verteilerkopf unterhalb der Oberkante des Vorratsbehälters auf dem Steigrohr sich befindet.

Die amerikanische Patentschrift 36 37 108 zeigt eine pneumatische Verteilmaschine mit einem zentralen Verteiler, von dem aus die Saatleitungen auf der einen Seite des Vorratsbehälters nach hinten geführt sind.

Der Erfindung liegt die Aufgabe zugrunde, eine vorteilhafte Anordnung des Steigrohres und eine vorteilhafte Führung der Verteilerleitungen von dem Verteilerkopf zu den Ausbringelementen zu ermöglichen.

Diese Aufgabe wird erfindungsgemäß durch die kennzeichnenden Merkmale des Anspruches 1 gelöst. Hierdurch ergibt sich eine vorteilhafte Anordnung des Steigrohres außerhalb des Vorratsbehälters, wobei gleichzeitig die Voraussetzung für eine vorteilhafte Führung der Verteilerleitungen zu den Ausbringelementen ermöglicht wird. Auch ist ein bequemes Befüllen des Vorratsbehälers möglich, weil sich keine hinderlichen Bauteile im Vorratsbehälter befinden. Desweiteren ergibt sich eine vorteilhafte Führung der Verteilerleitungen. Somit weisen die Verteilerleitungen vom Verteilerkopf zu den Ausbringelementen ein ausreichendes Gefälle und annähernd eine gleiche Länge auf, so daß zu Beginn und zu Ende einer Arbeitsbahn das Material ausreichend gleichmäßig zu den Ausbringelementen gelangt bzw. die Ausbringung gleichmäßig beendet ist.

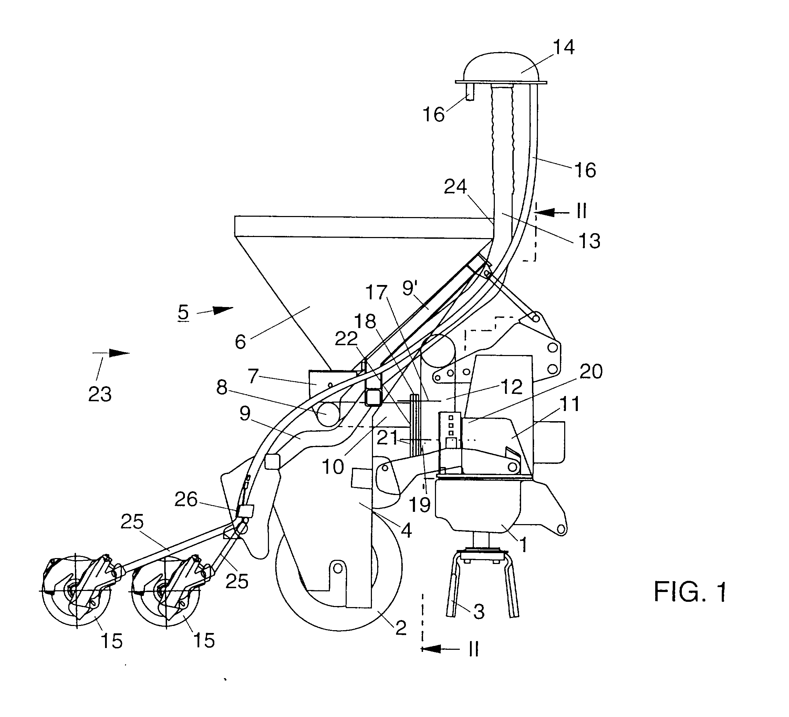

Weitere Einzelheiten der Erfindung sind den übrigen Unteransprüchen, der Beispielsbeschreibung und den Zeichnungen zu entnehmen. Hierbei zeigen
- Fig.1: die pneumatische Verteilmaschine als Bestandteil einer Bestellkombination in Seitenansicht und in Prinzipdarstellung und

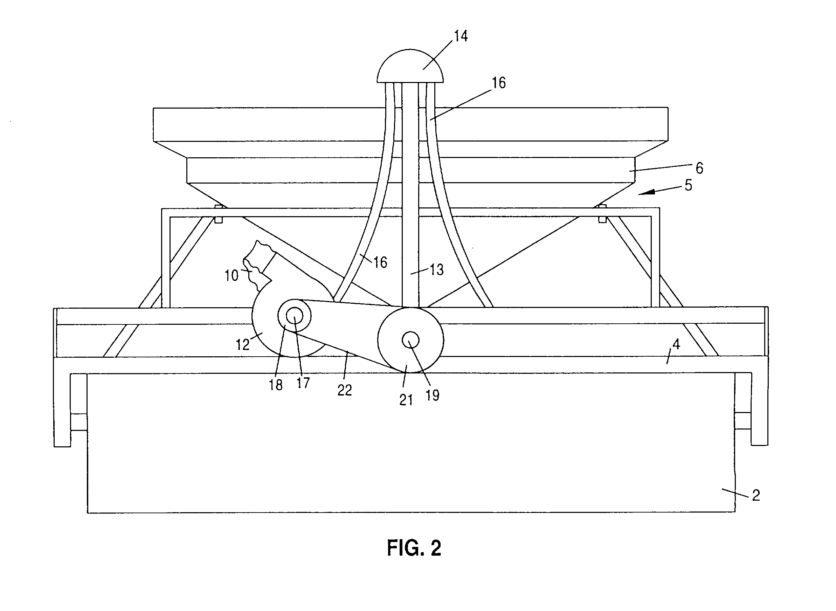

- Fig.2: die Bestellkombination mit der Verteilmaschine in der Ansicht von vorne und in Prinzipdarstellung.

Die landwirtschaftliche Bestellkombination besteht aus der zapfwellenangetriebenen Bodenbearbeitungsmaschine 1, hinter der eine Nachlaufwalze 2 angeordnet ist, und der pneumatischen Verteilmaschine 5 Die Nachlaufwalze 2 ist gegenüber der Bodenbearbeitungsmaschine 1 höhenverstellbar ausgebildet, so daß über die Nachlaufwalze 2 die Arbeitstiefe der Bodenbearbeitungswerkzeuge 3 der Bodenbearbeitungsmaschine 1, die im Ausführungsbeispiel als Kreiselegge ausgebildet ist, einstellbar ist. Die Bodenbearbeitungsmaschine 1 kann während des Einsatzes aufgrund der beweglichen Verbindung zwischen der Bodenbearbeitungsmaschine 1 und der Nachlaufwalze 2 nach oben ausweichen, wenn die Bodenbearbeitunswerkzeuge 3 auf dem Boden sich befindliche Steine oder andere Hindernisse auftreten, ohne die Nachlaufwalze 2 anheben zu müssen. Auf dem Rahmen 4 der Nachlaufwalze 2 ist die pneumatische Verteilmaschine 5 angeordnet. Die pneumatische Verteilmaschine 5 weist den zumindest im unteren Bereich trichterförmig ausgebildeten Vorratsbehälter 6, das an dem trichterförmigen Ende des Vorratsbehälters 6 sich anschließende Dosierorgan 7 auf. Über das Dosierorgan 7 wird das sich im Vorratsbehälter 6 befindliche Material über eine Schleuse 8 in die Förderleitung 9 eingeschleust. Die Förderleitung 9 ist über den beweglichen Schlauch 10 an das auf dem Rahmen 11 der Bodenbearbeitungsmaschine 1 angeordnete Gebläse 12 angeschlossen. Das andere Ende der Förderleitung 9 setzt sich als Steigrohr 13 bis zu dem Verteilerkopf 14 fort. Der Verteilerkopf 14 weist eine Anzahl von Abgängen auf, an die die zu den Säscharen 15 führenden Saatleitungsschläuche 16 angeschlossen sind.

Auf der Gebläseantriebswelle 17 ist eine Keilriemenscheibe 18 angeordnet. Ebenfalls ist auf der Zapfwellendurchtriebswelle 19 des Getriebes 20 eine weitere Keilriemenscheibe 21 befestigt. Um diese beiden Keilriemenscheiben 18 und 21 ist der Keilriemen 22 geschlungen, so daß direkt von der Zapfwellendurchtriebswelle 19 die Gebläseantriebswelle 17 des Gebläses 12 angetrieben wird.

Damit eine Bewegung zwischen dem Gebläse 12, welches auf der Bodenbearbeitungsmaschine 1 angeordnet ist und der Schleuse 9 bzw. der Steigleitung 13, welche die Bewegungen der Nachlaufwalze 2 ausführen, möglich ist, ist zwischen der Schleuse 9 bzw. der Steigleitung 16 und dem Gebläse ein biegsamer und beweglicher Schlauch 10 angeordnet.

Das Steigrohr 13 der Förderleitung ist in Fahrtrichtung 23 gesehen auf der Vorderseite 24 des Vorratsbehälters 6 stehend angeordnet. Die von der Schleuse 8 zu dem Steigrohr 13 führende Förderleitung 9' ist an die vordere Schräge des Vorratsbehälters 6 schräg nach vorn oben geführt. Das Steigrohr 13 mit dem Verteilerkopf 14 ist also unmittelbar vor dem Vorratsbehälter 6 angeordnet.

Somit ist die gesamte Öffnung oberhalb des Vorratsbehälters 6 frei, so daß bequem das Material in den Vorratsbehälter 6 eingefüllt werden kann.

Über den Verteilerkopf 14 wird das sich im Vorratsbehälter 6 befindliche Material auf die einzelnen sich am Verteilerkopf 14 befindlichen Auslaßöffnungen verteilt. An diese Auslaßöffnungen sind die zu den Säscharen führenden Verteilerleitungen 16 angeordnet. Die Verteilerleitungen 16 sind von dem Verteilerkopf 14 zu den Säscharen 15 unterhalb der seitlichen schrägen Wände des Vorratsbehälters 6 nach hinten verlaufend angeordnet. Die Säschare 15 befinden sich auf der Rückseite der Verteilmaschine 5 und sind mittels Scharhalter 25 in Höhenrichtung bewegbar an einem quer zur Fahrtrichtung 23 verlaufenden Scharbalken 26 abwechselnd auf Lücke in zwei Querreihen angeordnet.

Die Verteilerleitungen 16 sind dicht unterhalb der schrägen, seitlichen und vorderen Wände des Vorratsbehälters 6 nach hinten, unten verlaufend angeordnet. Somit sind die Verteilerleitungen 16 auf möglichst kurzem Wege bei annähernd gleicher Länge aller Verteilerleitungen 16 zu den Säscharen 15 optimal verlegt.

## Patentansprüche

1. Pneumatische Verteilmaschine mit einem trichterförmigen Vorratsbehälter, an dessen unteren Bereich sich zumindest eine Dosiereinrichtung anschließt, welche das sich im Vorratsbehälter befindliche Material einer pneumatischen Förderleitung zuführt, die in ein Steigrohr mit an dessen oberen Ende angeordneten Verteilerkopf mündet, wobei an den Ausgängen des Verteilerkopfes sich Verteilerleitungen anschließen, die in Materialausbringelementen münden und wobei das Steigrohr (13) mit dem Verteilerkopf (14) unmittelbar vor dem Vorratsbehälter (6) angeordnet ist dadurch gekennzeichnet, daß das Steigrohr (13) mit dem Verteilerkopf (14) sich bis über die Oberkante des Vorratsbehälters erstreckt, daß der Verteilerkopf oberhalb der Oberkante des Vorratsbehälters auf dem Steigrohr angeordnet ist, daß die Verteilerleitungen (16) von dem Verteilerkopf (14) zu den Ausbringelementen (15) an der Oberkante des Vorratsbehälters vorbeilaufend und unterhalb der vorderen und seitlichen schrägen Wände des Vorratsbehälters (6) nach hinten verlaufend angeordnet sind.

2. Verteilmaschine nach Anspruch 1, dadurch gekennzeichnet, daß die Ausbringelemente (15) auf der in Fahrtrichtung (23) gesehen hinteren Seite der Verteilmaschine (5) angeordnet sind.

3. Verteilmaschine nach Anspruch 1, dadurch gekennzeichnet, daß die Ausbringelemente als Säschare (5) ausgebildet sind.

## Claims

1. Pneumatic distributor provided with a funnel-shaped hopper, the lower region of which communicates with at least one metering arrangement, which supplies the material, situated in the hopper, to a pneumatic conveyor tube, which extends into a feedpipe having a distributor head disposed on the upper end thereof, the outlets of the distributor head communicating with distribution lines which extend into material distributing members, and the feedpipe (13), with the distributor head (14), being disposed directly in front of the hopper (6), characterised in that the feedpipe (13), with the distributor head (14), extends beyond the upper edge of the hopper, in that the distributor head is disposed on the feedpipe above the upper edge of the hopper, and in that the distribution lines (16) are disposed so as to extend from the distributor head (14) to the distributing members (15) past the upper edge of the hopper and to extend rearwardly beneath the front and lateral inclined walls of the hopper (6).

2. Distributor according to claim 1, characterised in that the distributing members (15) are disposed on the rear side of the distributor (5), when viewed with respect to the direction of travel (23).

3. Distributor according to claim 1, characterised in that the distributing members are sowing coulters (15).

## Revendications

1. Distributeur pneumatique d'engrais comportant un réservoir en forme de trémie dont la zone inférieure est suivie d'au moins une installation de dosage conduisant les produits contenus dans le réservoir à une conduite de transfert pneumatique débouchant dans une colonne montante dont l'extrémité supérieure est munie de la tête de répartition, les sorties de la tête de répartition étant raccordées à des conduites de répartition qui débouchent dans les éléments de distribution de matière et la colonne montante (13) avec la tête de répartition (14) est prévue directement devant le réservoir (6),
caractérisé en ce que
- la colonne montante (13) est reliée à la tête de répartition (14) qui arrive jusqu'au-dessus du bord supérieur du réservoir d'alimentation, et la tête de répartition, au-dessus de l'arête supérieure du réservoir d'alimentation, se trouve sur la colonne montante,
- les conduites de répartition 16 reliant de la tête de répartition (14) aux éléments de distribution (15) en passant sur le bord supérieur du réservoir d'alimentation et en dessous des parois avant et latérales, inclinées du réservoir (6), pour arriver jusqu'à l'arrière.

2. Distributeur selon la revendication 1,
caractérisé en ce que
les éléments de distribution (15) sont prévus sur le côté arrière du distributeur (5) par rapport à la direction de déplacement (23).

3. Distributeur selon la revendication 1,
caractérisé en ce que
les éléments d'épandage sont en forme de socs de semoir (5).
